# EUROPEAN PATENT APPLICATION

(11) **EP 2 546 692 A1**
(43) Date of publication of application: **16.01.2013**
(21) Application number: 11768674.1
(22) Date of filing: 24.02.2011
(51) Int. Cl.: G02F 1/1333, G02F 1/1345, G09F 9/00

(54) **LIQUID CRYSTAL DISPLAY DEVICE**

(30) Priority: 14.04.2010 JP 2010093107
(71) Applicant: Sharp Kabushiki Kaisha, Osaka-shi, Osaka 545-8522 (JP)
(72) Inventor: MURAOKA, Takeshi, Osaka-shi, Osaka 545-8522 (JP)
(74) Representative: Müller-Boré & Partner Patentanwälte
(86) International application number: PCT/JP2011/054099
(87) International publication number: WO 2011/129153

(57) **Abstract**

In order to reduce an erroneous operation and electrostatic breakdown resulting from external static electricity, a liquid crystal display device includes: a first pad (341) that is connected to ground wiring provided in a flexible substrate (3) and that is in contact with a rear case (4); and a second pad (342) that is connected to the ground wiring and that is in contact with a front case (5). Here, the first pad (341) and the second pad (342) are provided in a protrusion portion (34) that is sandwiched between a side wall (42) and an external wall (52).

## Description

### Technical Field

The present invention relates to a liquid crystal display device that copes with an erroneous operation and electrostatic breakdown resulting from external static electricity.

### Background Art

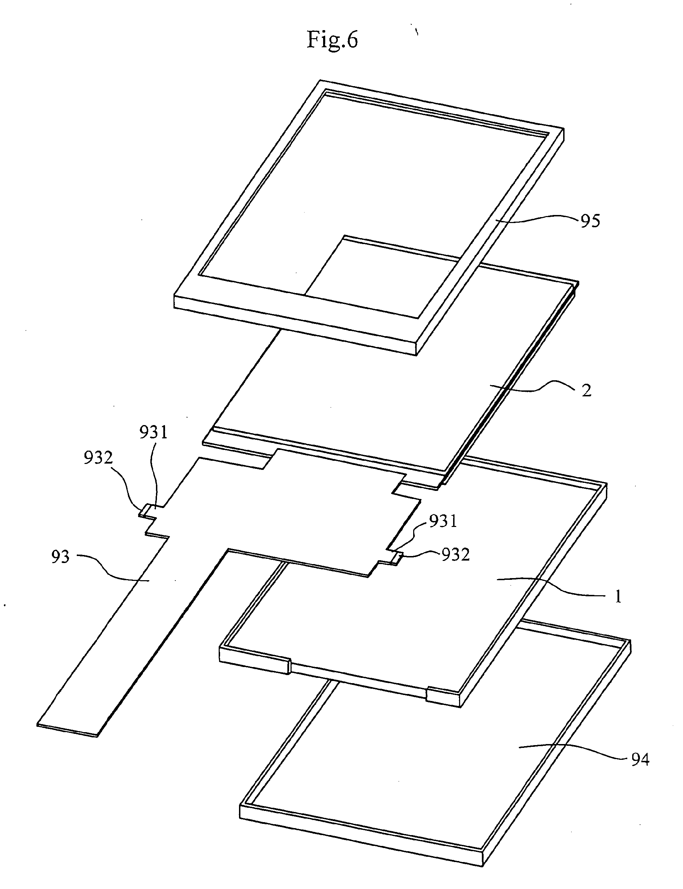

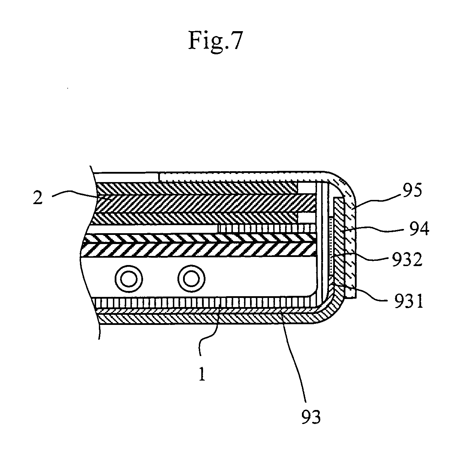

The structure of a conventional liquid crystal display device will be described with reference to accompanying drawings. Fig. 6 is an exploded perspective view of the conventional liquid crystal display device; Fig. 7 is an enlarged cross-sectional view of the conventional liquid crystal display device. The conventional liquid crystal display device includes a backlight unit 1, a liquid crystal display panel 2 that is incorporated in the front surface of the backlight unit 1 and a flexible substrate 93 that is attached to the liquid crystal display panel 2. The flexible substrate 93 is folded to the back surface of the backlight unit 1. The liquid crystal display panel 2 adjusts the transmittance of light from the backlight unit 1, and thereby forms an image on the front surface.

As shown in Fig. 7, the liquid crystal display panel 2 is incorporated in a concave portion formed in the front surface of the backlight unit 1. The backlight unit 1 in which the liquid crystal display panel 2 is incorporated is arranged in a rear case 94 formed by cutting and bending a metal plate; furthermore, a front case 95 is externally fitted to the front surface side of the rear case 94. In the front case 95, an opening is formed through which an image display portion where an image on the front surface of the liquid crystal display panel 2 is displayed is exposed. The front case 95 is externally fitted to the rear case 94 to press the front surface perimeter of the liquid crystal display panel 2.

In the liquid crystal display device as described above, an erroneous operation and electrostatic breakdown resulting from external static electricity are problematic. In order to cope with the erroneous operation and the electrostatic breakdown resulting from the static electricity, a method is adopted of connecting the rear case 94 and the front case 95 to ground wiring on the flexible substrate. As shown in Fig. 7, in the liquid crystal display device, the rear case 94 and the backlight unit 1 sandwich a pad 932 arranged on a protrusion portion 931 of the flexible substrate 93. The pad 932 is connected to the ground wiring on the flexible substrate 93, is conductive and connects the rear case 94 to the ground wiring on the flexible substrate 93. The front case 95 that is externally fitted to the rear case 94 is also connected through the rear case 94 and the pad 932 to the ground wiring on the flexible substrate 93.

For example, in a liquid crystal display device disclosed in JP-A-2003-186042, an upper frame (in the present specification, the font case) and a lower case (in the present specification, the rear case) are brought into contact by a contact part formed in the upper frame, and, when a case is screwed into a holding portion formed in the lower frame, a tip end of the screw is brought into contact with an electrode portion in contact with ground wiring (in the present specification, the ground wiring) on a circuit substrate, with the result that the ground wiring is connected to the lower frame and the upper frame to ground static electricity.

### Related Art Document

### Patent Document

Patent document 1: JP-A-2003-186042

### Disclosure of the Invention

### Problems to be Solved by the Invention

However, in the liquid crystal display device as shown in Fig. 7, an error in manufacturing, an error in assembly or the like may prevent the rear case 94 and the front case 95 from being reliably brought into contact. Since the front case 95 is connected through the rear case 94 to the pad 932, when the rear case 94 and the front case 95 are not reliably in contact, it is impossible to reliably ground the external static electricity applied to the front case 95 to the ground wiring on the flexible substrate 93 through the rear case 94 and the pad 932, with the result that this causes an erroneous operation and electrostatic breakdown through static electricity.

Moreover, in the liquid crystal display device disclosed in JP-A-2003-186042, the electrode portion of the circuit substrate needs to be formed in a portion with which the tip end of the screw makes contact, and thus the flexibility of the design of the circuit substrate may be reduced. When vibration, impact or the like causes the screw to be loosen, it is likely that the connection between the lower frame and the ground wire on the circuit substrate is broken, and that thus the lower frame and the upper frame cannot be reliably grounded.

Hence, the present invention has an object to provide a liquid crystal display device that can reduce an erroneous operation and electrostatic breakdown resulting from external static electricity.

### Means for Solving the Problem

To achieve the above object, according to the present invention, there is provided a liquid crystal display device including: a backlight unit; a liquid crystal display panel that is arranged on a front surface side of the backlight unit; a flexible substrate that is attached to a side portion of the liquid crystal display panel and that is folded to a back surface side of the backlight unit; a metallic rear case that is arranged on a back surface of the flexible substrate and that includes a side wall surrounding an outer perimeter of the backlight unit; and a metallic front case that holds a front surface perimeter of the liquid crystal display panel and that includes an external wall which is externally fitted to the side wall of the rear case, in which the flexible substrate includes: a protrusion portion which protrudes from a side portion to an outside and in which at least a tip end is sandwiched between the side wall and the external wall; a first pad which is connected to ground wiring provided on the flexible substrate and which is in contact with the rear case; and a second pad which is connected to the ground wiring and which is in contact with the front case, and at least the second pad is provided in a portion of the protrusion portion which is sandwiched between the side wall and the external wall.

In this configuration, the external wall and the second pad are directly connected, and thus the front case and the ground wiring of the flexible substrate are connected. The second pad is sandwiched between the side wall and the external wall, and thus it is unlikely that the second pad is separated from the external wall. In this way, it is possible to reliably and safely pass static electricity applied to the front case to the ground wiring. The rear case is also in contact with the first pad, and thus it is possible to reliably and safely pass the static electricity applied to the front case to the ground wiring.

In this way, even if static electricity is applied to either of the rear case and the front case covering the outside portion of the liquid crystal display device, it is possible to reduce an erroneous operation and electrostatic breakdown resulting from the static electricity. The first pad may also be provided in a portion sandwiched between the side wall of the protrusion portion and the external wall. The first pad or the second pad or both of them included in the protrusion portion are set such that they are thick and thus the side wall and (or) the external wall are pressed. Thus, the force with which the protrusion portion is sandwiched between the side wall and the external wall is increased, and the first pad and the second pad are firmly sandwiched between the side wall and the external wall.

In the configuration described above, the first pad and the second pad may be integrally formed, and the first pad and the second pad may be provided in the portion of the protrusion portion which is sandwiched between the side wall and the external wall.

In this configuration, since the first pad and the second pad are integrally formed and are arranged in the protrusion portion, and the first pad and the second pad are respectively in contact with the side wall and the external wall, it is possible to simplify the configuration of the flexible substrate.

In the configuration described above, the rear case may include a through-hole through which the protrusion portion is passed, and the protrusion portion of the flexible substrate may be so formed as to extend beyond a front surface side of the side wall and around to an outside of the side wall.

In the configuration described above, the first pad and a contact portion of the side wall may be connected or soldered through an anisotropic conductive film.

In this configuration, for example, in the liquid crystal display device in which the protrusion portion is passed through the through-hole, since the protrusion portion folded to the opposite side to the direction of the movement of the external wall can be fixed such that the protrusion portion is not peeled off, it is not necessary to prevent the protrusion portion from being peeled off when the front case is attached and thus it is possible to omit the bothersome operation.

In the configuration described above, on a portion where at least one of the side wall and the external wall overlaps the second pad, a convex portion protruding toward the second pad may be provided.

In this configuration, even if an error in manufacturing or an error in assembly prevents the external wall of the front case from easily making contact with the side wall of the rear case, since the convex portion presses the second pad, the external wall and the second pad can be stably in contact. In this way, since the front case and the ground wiring of the flexible substrate are reliably connected, it is possible to reliably and safely pass static electricity applied to the front case to the ground wiring. When the first pad and the second pad are formed in the same portion of the protrusion portion, the rear case and the first pad are stably connected. Thus, it is also possible to reliably and safely pass the static electricity applied to the rear case to the ground wiring.

In this way, even when static electricity is applied to the liquid crystal display device from the outside, it is possible to reliably and safely pass the static electricity from the rear case and the front case to the ground wiring of the flexible substrate, and thus it is possible to reduce an erroneous operation and electrostatic breakdown resulting from static electricity.

In the liquid crystal display device of the present invention, since it is possible to cope with static electricity without any use of an external member, it is not necessary to perform a measure for static electricity (grounding of a case) when an electronic device such as a thin television device, a thin display device or a mobile telephone is incorporated. Thus, it is possible to easily assembly the liquid crystal display device of the present invention into the electronic device.

### Advantages of the Invention

According to the present invention, it is possible to provide a liquid crystal display device that can reduce, by reliably connecting a front case and a rear case to ground wiring on a flexible substrate, an erroneous operation and electrostatic breakdown resulting from external static electricity.

### Brief Description of Drawings

[Fig. 1] An exploded perspective view of a liquid crystal display device according to the present invention;
[Fig. 2] An enlarged cross-sectional view of the liquid crystal display device according to the present invention;
[Figs. 3A to 3E] Perspective views sequentially showing the procedure of assembling the liquid crystal display device according to the present invention;
[Fig. 4] An enlarged cross-sectional view of another example of the liquid crystal display device according to the present invention;
[Fig. 5] An enlarged cross-sectional view of yet another example of the liquid crystal display device according to the present invention;
[Fig. 6] An exploded perspective view of a conventional liquid crystal display device; and [Fig. 7] An enlarged cross-sectional view of the conventional liquid crystal display device.

### Description of Embodiments

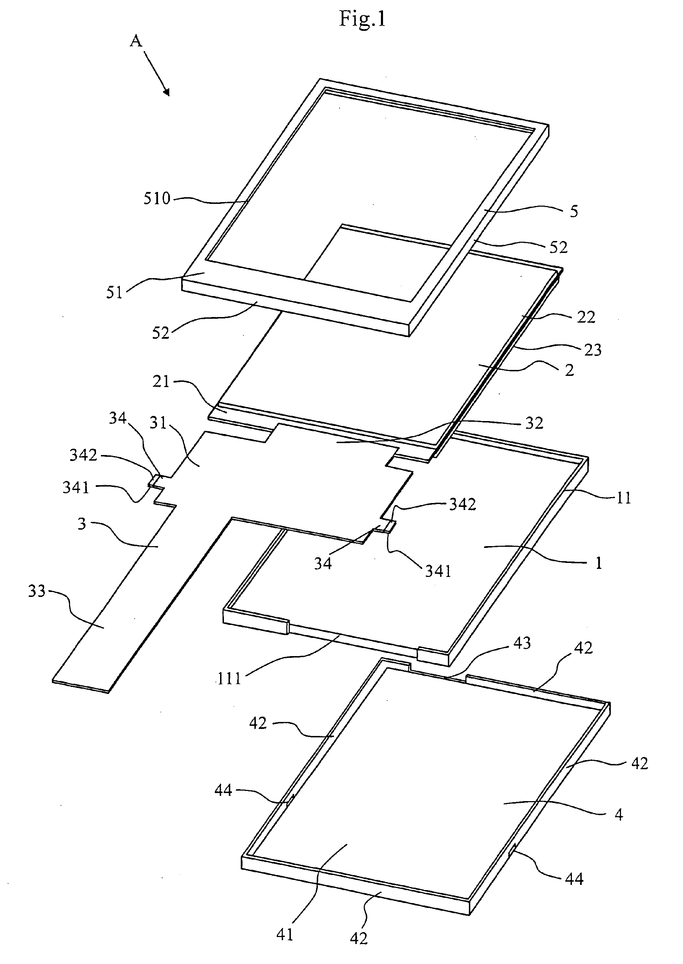

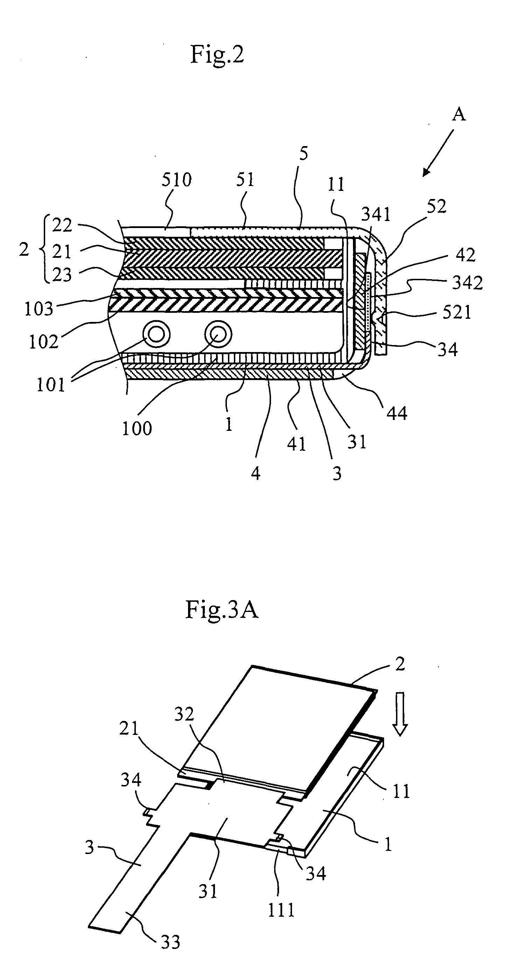

An embodiment of the present invention will be described below with reference to accompanying drawings. Fig. 1 is an exploded perspective view of a liquid crystal display device according to the present invention; Fig. 2 is an enlarged cross-sectional view of the liquid crystal display device according to the present invention. As shown in Figs. 1 and 2, the liquid crystal display device A includes a backlight unit 1, a liquid crystal display panel 2 that is incorporated in the front surface of the backlight unit 1 and a flexible substrate 3 that is attached to the liquid crystal display panel 2.

The liquid crystal display device A includes: a rear case 4 that houses the backlight unit 1 in which the liquid crystal display panel 2 is incorporated in its front surface and in which the flexible substrate 3 is folded to its back side; and a front case 5 that holds the front surface side perimeter of the liquid crystal display panel 2 and that is externally fitted to the rear case 4.

As shown in Fig. 2, the backlight unit 1 includes, a backlight frame 100 and optical elements such as a light source 101, a diffusion plate 102 and an optical sheet group 103; the backlight unit 1 applies planar light uniformly distributed within the surface to the liquid crystal display panel 2. On the front surface side of the backlight unit 1, a panel holding portion 11 for holding the liquid crystal display panel 2 is provided. The panel holding portion 11 includes a wall member that is formed to surround the outer perimeter of the liquid crystal display panel 2. In the panel holding portion 11, a cut 111 where a connection portion 32 of the flexible substrate 3 is arranged is provided (see Fig. 1).

As shown in Fig. 2, the liquid crystal display panel 2 includes a liquid crystal panel 21 in which liquid crystal is sealed, a polarization plate 22 that is adhered to the front surface (the side of a viewer) of the liquid crystal panel 11 and a polarization plate 23 that is adhered to the back surface (the side of the backlight unit 2) of the liquid crystal panel 21. The liquid crystal panel 21 includes: an array substrate including switching elements such as TFTs (thin film transistors); an opposite substrate that is arranged opposite the array substrate and that includes a color filter; and the liquid crystal with which an area between the array substrate and the opposite substrate is sealed in (those components are not shown).

In the liquid crystal display panel 2, the transmittance is adjusted by the upper and lower polarization plates 22 and 23 and the liquid crystal of the liquid crystal panel 21, the color filter is utilized to disperse the transmitted light into red light, green light and blue light and an image is displayed on the image display portion on the front.

In the liquid crystal display panel 2, the flexible substrate 3 is attached to a short side of the rectangular plate-shaped array substrate of the liquid crystal panel 21. A drive signal for driving the liquid crystal panel 21 is input through the flexible substrate 3 to each of the switching elements of the liquid crystal panel 21.

The flexible substrate 3 is a deformable substrate that is formed by covering the wiring with an insulating film. On the flexible substrate 3, signal wiring along which the drive signals are fed to the switching elements and the ground wiring are provided (both of which are not shown). As shown in Fig. 1, the flexible substrate 3 includes: a rectangular main body portion 31; a connection portion 32 that is formed on a long side of the main body portion 31 and that connects the main body portion 31 and the liquid crystal panel 21 together; an I/F terminal portion 33 that is formed on the other long side of the main body portion 31 and that is connected to an external substrate; and protrusion portions 34 that protrude from the short sides of the main body portion 31. As will be described later, the flexible substrate 3 is folded at the connection portion 32, and thus the main body portion 31 is arranged on the back surface side of the backlight unit 1.

On the front and back of the tip end of the protrusion portion 34, a first pad 341 and a second pad 342 are formed. The first pad 341 and the second pad 342 are connected to the ground wiring, and are formed of a conductive material such as a metal. In the flexible substrate 3, the first pad 341 and the second pad 342 are integrally formed.

Each of the rear case 4 and the front case 5 is made by cutting and bending a metal plate. The rear case 4 includes a rectangular back surface plate 41 and a side wall 42 that is formed by bending the four sides of the back surface plate 41. In a portion of the side wall 42 which the I/F terminal portion 33 overlaps, a cut 43 where the I/F terminal portion 33 is arranged is formed. In a boundary portion between the back surface plate 41 of the rear case 4 and the side wall 42, through-holes 44 are formed in portions where the boundary portion overlaps the positions of the protrusion portions 34 of the flat substrate 3 folded to the back surface of the backlight unit 1 when the backlight unit 1 is assembled.

The front case 5 includes a rectangular front surface plate 51 and an external wall 52 that is formed by bending the four sides of the front surface plate 51. The front surface plate 51 is provided with an opening 510 through which the image display portion on the front surface of the liquid crystal display panel 2 is exposed, and presses the front surface perimeter of the liquid crystal display panel 2.

The liquid crystal display device of the present invention will be described in further detail with reference to accompanying drawings. Fig. 2 shows an enlarged area near the protrusion portion 34, which is the main portion of the present invention. As shown in Fig. 2, the protrusion portion 34 of the flexible substrate 3 is exposed through the through-hole 44 to the outside. The tip end of the protrusion portion 34 is arranged between the side wall 42 and the external wall 52, and is sandwiched between the side wall 42 and the external wall 52. The protrusion portion 34 penetrates the through-hole 44 and is sandwiched between the side wall 42 and the external wall 52, and thus the length of the protrusion portion 34 can be reduced. It is also possible to decrease the number of times the protrusion portion 34 is bent, and to prevent the risk that a wire is broken and an insulting film comes off in the flexible substrate 3 and the protrusion portion 34. Furthermore, since the side wall 42 and the external wall 52 are not bent at their ends, an undue force is unlikely to be applied, and thus it is possible to reduce the breakage of the protrusion portions 34.

As described above, in the tip end portion of the protrusion portion 34, the first pad 341 and the second pad 342 are provided. As shown in Fig. 2, the first pad 341 is in contact with the side wall 42, and the second pad 342 is in contact with the external wall 52. Since the first pad 341 and the second pad 342 are connected to the ground wiring of the flexible substrate 3, the rear case 4 and the front case 5 are connected to the ground wiring of the flexible substrate.

Hence, when static electricity is applied to the rear case 4 and (or) the front case 5 from the outside, the static electricity can be reliably and safely passed to the ground wiring of the flexible substrate 3. Thus, it is possible to reduce an erroneous operation and electrostatic breakdown resulting from static electricity. Unlike a conventional one, the front case 5 is also connected through the second pad 342 to the ground wiring, and thus it is possible to reliably and safely pass static electricity from the front surface side to the ground wiring of the flexible substrate 3. Thus, it is possible to reduce the occurrence of an erroneous operation and electrostatic breakdown resulting from the static electricity from the front surface side.

Although, in the liquid crystal display device A of the embodiment described above, the first pad 341 and the second pad 342 are integrally formed, the present invention is not limited to this configuration. For example, the first pad 341 and the second pad 342 may be individually attached to the front and back of the flexible substrate 34, the insulting film covering the outside of the wiring of the flexible substrate 3 may be peeled off and the metal surface may be exposed.

As the first pad 341 and (or) the second pad 342, a thick member can be employed. As described above, the first pad 341 and (or) the second pad 342 that are thick are employed, and thus the first pad 341 and (or) the second pad 342 press the external wall 52, with the result that it is possible to increase the elastic force from the external wall 52 to the protrusion portion 34. In this way, it is possible to increase a force sandwiching the protrusion portion 34 including the first pad 341 and (or) the second pad 342, between the side wall 42 and the external wall 52.

Furthermore, the portion where the flexible substrate 3 is in contact with the rear case 4 is present not only in the protrusion portions 34 but also in a portion arranged in a space sandwiched between the backlight unit 1 and the rear case 4. In other words, the main body portion 31 and the I/F terminal portion 33 are also in contact with the rear case 4. Hence, the first pad 341 does not always need to be formed in the protrusion portion 34, and it may be formed in the main body portion 31 and the I/F terminal portion 33. The first pad 341 may be formed in a place where the first pad 341 and the rear case 4 can be reliably and safely in contact and where the first pad 341 can be easily connected to the ground wiring of the flexible substrate 3.

In the liquid crystal display device A shown in Fig. 2, in order to increase the force sandwiching the first pad 341 and the second pad 342 between the side wall 42 and the external wall 52, a convex portion 521 protruding toward the side wall 42 is formed on the external wall 52. This convex portion does not always need to be formed on the external wall 52; a convex portion protruding toward the external wall 52 may be formed on the inner wall 42. Instead of forming the convex portion on one wall, it may be formed on both walls. Furthermore, when the first pad 341 and the side wall 42 can be reliably in contact, and the second pad 342 and the external wall 52 can also be reliably in contact, the convex portion may be omitted.

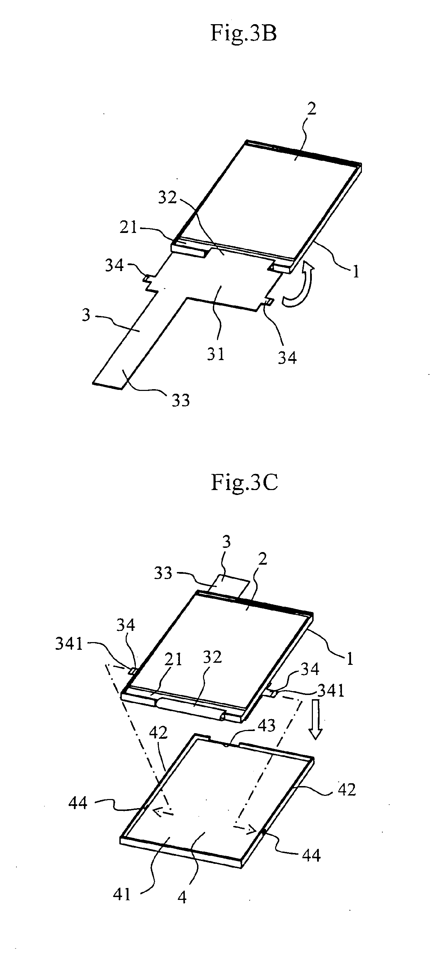

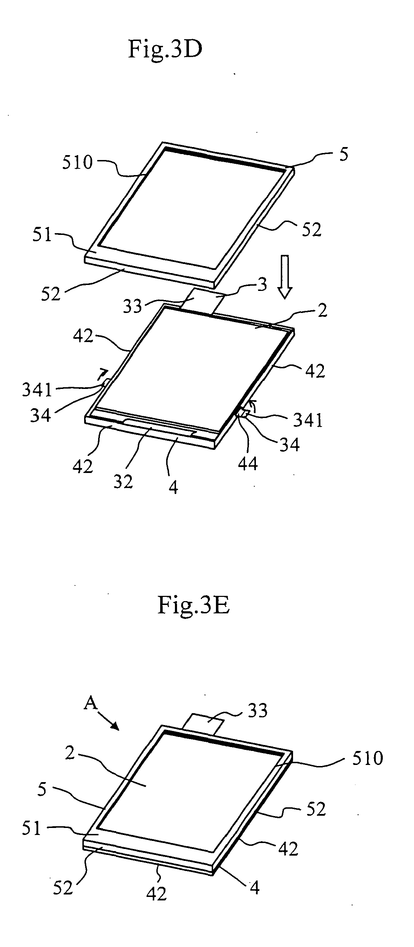

The process of assembling the liquid crystal display device of the present invention will now be described. Fig. 3 is a diagram sequentially showing the process of assembling the liquid crystal display device of the present invention. As shown in Fig. 3A, the liquid crystal display panel 2 is first assembled into the panel holding portion 11 of the backlight unit 1. Here, the liquid crystal display panel 2 is assembled such that the connection portion 32 of the flexible substrate 3 is positioned in the cut 111. Then, as shown in Fig. 3B, the flexible substrate 3 is folded at the connection portion 32, and thus the main body portion 31 is moved to the back surface side of the backlight unit 1.

Then, as shown in Fig. 3C, the liquid crystal display panel 2 is assembled into the panel holding portion 11, and, with the main body portion 31 of the flexible substrate 3 arranged on the back surface side of the backlight unit 1, the backlight unit 1 is assembled into the rear case 4. Here, the side wall 42 of the rear case 4 surrounds the outer perimeter of the backlight unit 1. The I/F terminal portion 33 is arranged at the cut 43. As shown in Fig. 3C, the protrusion portions 34 are passed through the through-holes 44, and are arranged to protrude to the outside of the side wall 42.

As shown in Fig. 3D, the portions of the protrusion portions 34 protruding from the through-holes 44 are folded to the front surface side along the side wall 42. Then, with the protrusion portions 34 folded, the front case 5 is attached from the front surface side of the rear case 4. Here, the external wall 52 of the front case 5 is externally fitted to the side wall 42 of the rear case 4 (see Figs. 2 and 3E and the like).

As shown in Fig. 3E, in the liquid crystal display device A, the front case 5 presses the front surface perimeter of the liquid crystal display panel 2, and the image display portion of the liquid crystal display panel 2 is exposed through the opening 510. With respect to the rear case 4 and the front case 5, a method of simply and firmly fixing the rear case 4 and the front case 5 can be adopted; specifically a so-called snap-fit mechanism of engaging an engagement hook into an engagement hole, screwing or the like can be adopted.

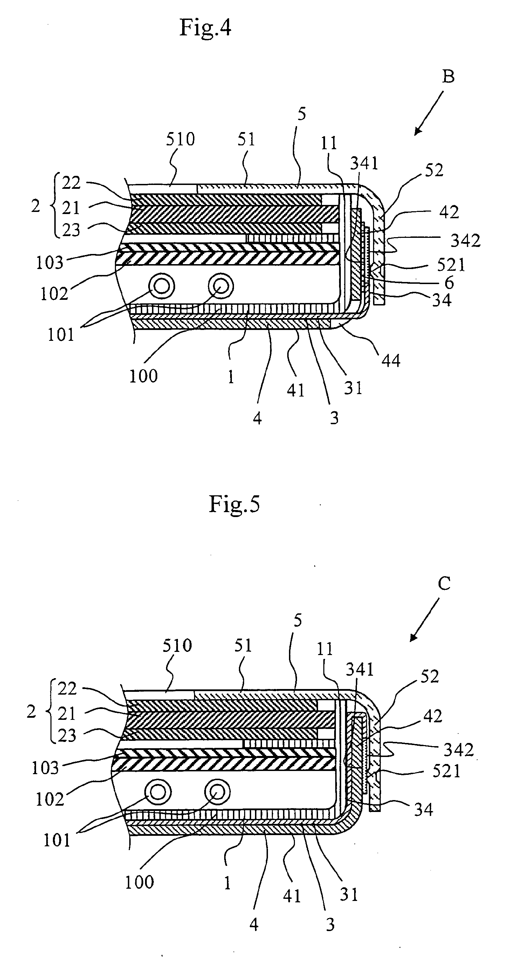

Another example of the liquid crystal display device according to the present invention will now be described with reference to accompanying drawings. Fig. 4 is an enlarged cross-sectional view of the example of the liquid crystal display device according to the present invention. The liquid crystal display device B shown in Fig. 4 has the same configuration as the liquid crystal display device A shown in Fig. 2 and the like except that an anisotropic conductive film (ACF) 6 is attached between the protrusion portion 34 of the flexible substrate 3 and the side wall 42; like portions are practically identified with like symbols, and their detailed description will not be repeated.

As shown in Fig. 3, the portions of the protrusion portions 34 protruding from the through-holes 44 are folded to the front surface side, and thereafter the front case 5 is attached. The direction in which the protrusion portion 34 is folded is opposite to the direction in which the external wall 52 is moved when the front case 5 is attached. In this case, when the front case 5 is externally fitted to the rear case 4, the external wall 52 presses the protrusion portion 34, and thus it is likely that the protrusion portion 34 (that is, the first pad 341 and the second pad 342) is not arranged between the side wall 42 and the external wall 52.

Hence, in the liquid crystal display device B, the portion (tip end portion) of the protrusion portion 34 of the flexible substrate 3 protruding from the through-hole 44 is folded to the front surface side, and is fixed with the anisotropic conductive film 6 to the side wall 42. In the liquid crystal display device B, the first pad 341 is in contact with the anisotropic conductive film 6. The anisotropic conductive film 6 is a film-shaped adhesive, and a portion to which a pressure is applied becomes conductive.

Thereafter, the front case 5 is attached from the front surface side of the rear case 4. Here, the convex portion 521 formed on the external wall 52 presses the second pad 342 of the protrusion portion 34 in the thickness direction. This pressing force is transmitted to the first pad 341, and the anisotropic conductive film 6 is pressed in the thickness direction. A portion of the anisotropic conductive film 6 that is pressed becomes conductive, and conductivity is achieved between the first pad 341 and the side wall 42.

As described above, the portion of the protrusion portion 34 protruding from the through-hole 44 is adhered to the side wall 42, and thus it is possible to omit a bothersome operation of pressing the protrusion portion 34 such that the protrusion portion 34 is not peeled off when the front case 5 is attached. In the present embodiment, the anisotropic conductive film 6 is used to fix the first pad 341 and the side wall 42; instead, it is possible to adopt a wide variety of methods, such soldering, in which the first pad 341 made of a metal and the side wall 42 made of a metal can be stably fixed and in which they can be made to become conductive.

Although the convex portion 521 is formed on the external wall 52, as in the liquid crystal display device A described above, the convex portion 521 may be formed on the side wall 42 or may be formed on each of the side wall 42 and the external wall 52. Alternatively, when the anisotropic conductive film 6 can be pressed so as to become conductive, the convex portion 521 may be omitted.

Yet another example of the liquid crystal display device according to the present invention will be described with reference to accompanying drawings. Fig. 5 is an enlarged cross-sectional view of the example of the liquid crystal display device according to the present invention. In the liquid crystal display device C shown in Fig. 5, the rear case 4 includes no through-hole, and the protrusion portion 34 of the flexible substrate 3 is formed to have a long length.

As shown in Fig. 5, in the liquid crystal display device C, the protrusion portion 34 of the flexible substrate 3 extends to the front surface side along the side wall 42 of the rear case 4, is folded over the edge of the side wall 42 on the front surface side and is arranged to make intimate contact with the outside of the side wall 42. Since, as described above, the protrusion portion 34 is arranged along the side wall 42, when the front case 5 is attached from the front surface side, the side wall 42 is moved while pressing the portion arranged on the outside of the side wall 42 of the protrusion portion 34 against the side wall 42. Thus, it is possible to omit a bothersome operation of fixing to the side wall 42 or pressing the protrusion portion 34 such that the protrusion portion 34 does not come off when the front case 5 is attached. Moreover, since it is not necessary to form through-holes 44 in the rear case 4, it is possible to increase the stiffness of the rear case 4 and to easily manufacture the rear case 4.

Although, in the present embodiment, the convex portion 521 is formed on the external wall 52, as in the liquid crystal display device A described above, the convex portion 521 may be formed on the side wall 42 or may be formed on each of the side wall 42 and the external wall 52. Alternatively, when the first pad 341 and the side wall 42 can be reliably in contact, and the second pad 342 and the external wall 52 can also be reliably in contact, the convex portion may be omitted.

Although the liquid crystal display devices according to the present invention have been described using the specific examples, the liquid crystal display devices according to the present invention are not limited to the examples described above. Various modifications are possible without departing from the spirit of the present invention.

### Industrial Applicability

The present invention can be utilized as display devices for devices such as a thin television device, a thin display device and a mobile telephone.

### List of Reference Symbols

- A, B, C: liquid crystal display device
- 1: backlight unit
- 100: backlight frame
- 101: light source
- 102: diffusion plate
- 103: optical sheet group
- 11: panel holding portion
- 111: cut
- 2: liquid crystal display panel
- 21: liquid crystal panel
- 22: polarization plate
- 23: polarization plate
- 3: flexible substrate
- 31: main body portion
- 32: connection portion
- 33: I/F terminal portion
- 34: protrusion portion
- 341: first pad
- 342: second pad
- 4: rear case
- 41: back surface plate
- 42: side wall
- 43: cut
- 44: through-hole
- 5: front case
- 51: front surface plate
- 510: opening
- 52: external wall
- 521: convex portion
- 6: anisotropic conductive film (AFC)

## Claims

1. A liquid crystal display device comprising:
a backlight unit;
a liquid crystal display panel that is arranged on a front surface side of the backlight unit;
a flexible substrate that is attached to a side portion of the liquid crystal display panel and that is folded to a back surface side of the backlight unit;
a rear case that is formed of a metal, that is arranged on a back surface of the flexible substrate and that includes a side wall surrounding an outer perimeter of the backlight unit; and
a front case that is formed of a metal, that holds a front surface perimeter of the liquid crystal display panel and that includes an external wall which is externally fitted to the side wall of the rear case,
wherein the flexible substrate includes: a protrusion portion which protrudes from a side portion to an outside and in which at least a tip end is sandwiched between the side wall and the external wall; a first pad which is connected to ground wiring provided on the flexible substrate and which is in contact with the rear case; and a second pad which is connected to the ground wiring and which is in contact with the front case, and
at least the second pad is provided in a portion of the protrusion portion which is sandwiched between the side wall and the external wall.

2. The liquid crystal display device of claim 1,
wherein the first pad and the second pad are integrally formed, and
the first pad and the second pad are provided in the portion of the protrusion portion which is sandwiched between the side wall and the external wall.

3. The liquid crystal display device of claim 1 or 2,
wherein the rear case includes a through-hole through which the protrusion portion is passed.

4. The liquid crystal display device of claim 1 or 2,
wherein the protrusion portion of the flexible substrate is so formed as to extend beyond a front surface side of the side wall and around to an outside of the side wall

5. The liquid crystal display device of any one of claims 1 to 4,
wherein the first pad and a contact portion of the side wall are connected through an anisotropic conductive film.

6. The liquid crystal display device of any one of claims 1 to 4,
wherein the first pad and a contact portion of the side wall are soldered to the side wall or the external wall.

7. The liquid crystal display device of any one of claims 1 to 6,
wherein, on a portion where at least one of the side wall and the external wall overlaps the second pad, a convex portion protruding toward the second pad is provided.
